# FASCICULE DE BREVET EUROPEEN

(11) **EP 2 875 998 B1**
(45) Date de publication et mention de la délivrance du brevet: **07.03.2018**
(21) Numéro de dépôt: 14194385.2
(22) Date de dépôt: 21.11.2014
(51) Int. Cl.: B60R 5/04

(54) **DISPOSITIF DE RECOUVREMENT D'UN COMPARTIMENT À BAGAGES DE VÉHICULE AUTOMOBILE**
ABDECKVORRICHTUNG EINES KOFFERRAUMABTEILS EINES KRAFTFAHRZEUGS
DEVICE FOR COVERING A LUGGAGE COMPARTMENT OF A MOTOR VEHICLE

(30) Priorité: 26.11.2013 FR 1361624
(43) Date de publication de la demande: 27.05.2015
(73) Titulaire: CENTRE D'ETUDE ET DE RECHERCHE POUR L'AUTOMOBILE (CERA), 51100 Reims (FR)
(72) Inventeur: Bonfils, Xavier, 51100 Reims (FR); Brillon, Eric, 51390 Rosnay (FR)
(74) Mandataire: Sayettat, Julien Christian

(56) Documents cités:
- EP-A2- 0 345 438
- WO-A1-2012/128157
- WO-A1-2013/001191
- US-B1- 6 457 688

## Description

L'invention concerne un dispositif de recouvrement d'un compartiment à bagages de véhicule automobile.

Il est connu, notamment du document WO2013/001191, de réaliser un dispositif de recouvrement d'un compartiment à bagages de véhicule automobile, ledit dispositif comprenant :
- un rideau souple de recouvrement des bagages actionnable entre une configuration déployée de recouvrement et une configuration rétractée de rangement,
- un carter de réception dudit rideau en configuration de rangement, ledit carter présentant une face externe,
- deux embouts en matériau plastique moulé emboités en extrémités dudit carter, chacun desdits embouts étant pourvu d'un moyen de verrouillage destiné à coopérer avec un moyen réciproque prévu sur une ébénisterie latérale respective de garnissage dudit compartiment.

Dans les réalisations connues, les embouts sont associés au carter en venant en recouvrement des bordures latérales de sa face externe, lesdites bordures étant donc respectivement recouvertes par une paroi de matériau plastique issue de matière d'un embout respectif, ladite paroi présentant généralement une faible épaisseur, par exemple de l'ordre de 1 à 3 mm.

Or, la demanderesse a observé qu'un tel agencement présente une dangerosité pour les occupants du véhicule.

En effet, en cas de collision du véhicule, les passagers arrière peuvent être projetés violemment contre les dossiers de sièges qui peuvent subir une déformation vers l'arrière et venir impacter le carter qui est monté à proximité. Le carter étant fixé aux ébénisteries par l'intermédiaire des embouts, ces derniers subissent un effort de pivotement par rapport audit carter, ce qui peut conduire à leur rupture.

La paroi de matériau plastique recouvrant les bordures latérales de la face externe est donc susceptible, du fait de son épaisseur modérée, de se rompre pour former des arêtes vives, voire pour former des éclats projetés au sein de l'habitacle, ce qui est susceptible de causer des lésions aux passagers.

L'invention a pour but de pallier cet inconvénient.

A cet effet, l'invention propose un dispositif de recouvrement d'un compartiment à bagages de véhicule automobile, ledit dispositif comprenant :
- un rideau souple de recouvrement des bagages actionnable entre une configuration déployée de recouvrement et une configuration rétractée de rangement,
- un carter de réception dudit rideau en configuration de rangement, ledit carter présentant une face externe,
- deux embouts en matériau plastique moulé emboités en extrémités dudit carter, chacun desdits embouts étant pourvu d'un moyen de verrouillage destiné à coopérer avec un moyen réciproque prévu sur une ébénisterie latérale respective de garnissage dudit compartiment,
lesdits embouts étant associés audit carter sans venir en recouvrement des bordures latérales de ladite face externe.

Dans cette description, les termes de positionnement dans l'espace (transversal, latéral, avant, arrière, longitudinal,...) sont pris en référence au dispositif en place dans le véhicule.

Avec l'agencement proposé, les bordures latérales de la face externe sont dépourvues de recouvrement par une paroi respective de matériau plastique issue de matière d'un embout, ce qui élimine le risque de création d'arêtes vives issues desdites parois ou d'éclats pouvant être projetés sur les occupants du véhicule en cas de choc.

D'autres particularités et avantages de l'invention apparaîtront dans la description qui suit, faite en référence aux figures jointes, dans lesquelles :
- la figure 1 est une vue en perspective partielle éclatée d'une partie latérale d'un dispositif selon une première réalisation,
- les figures 2 sont des vues similaires à la figure 1, avant (3a) et après (3b) montage du cache bagages dans le véhicule,
- la figure 3 est une vue schématique en perspective d'une partie avant d'ébénisterie pourvue d'un doigt formant moyen de verrouillage réciproque,
- les figures 4 sont des vues schématiques partielles en vue selon une direction longitudinale d'un dispositif selon une deuxième réalisation, ledit dispositif étant disposé dans son environnement, ledit dispositif étant verrouillé sur une ébénisterie (4a) et déverrouillé (4b) de manière à permettre le retrait dudit dispositif de ladite ébénisterie.

En référence aux figures, on décrit un dispositif 3 de recouvrement d'un compartiment à bagages de véhicule automobile, ledit dispositif comprenant :
- un rideau souple, non représenté, de recouvrement des bagages actionnable entre une configuration déployée - notamment déroulée - de recouvrement et une configuration rétractée - notamment enroulée - de rangement, l'enroulement étant notamment réalisé autour d'un axe actionné par ressort,
- un carter 6 - notamment en tôle repliée - de réception dudit rideau en configuration de rangement, ledit carter présentant une face externe,
- deux embouts 7 en matériau plastique moulé emboités en extrémités dudit carter, chacun desdits embouts étant pourvu d'un moyen de verrouillage 8,10,15 destiné à coopérer avec un moyen réciproque 4,16 prévu sur une ébénisterie latérale 2 respective de garnissage dudit compartiment,
lesdits embouts étant associés audit carter sans venir en recouvrement des bordures latérales 24 de ladite face externe.

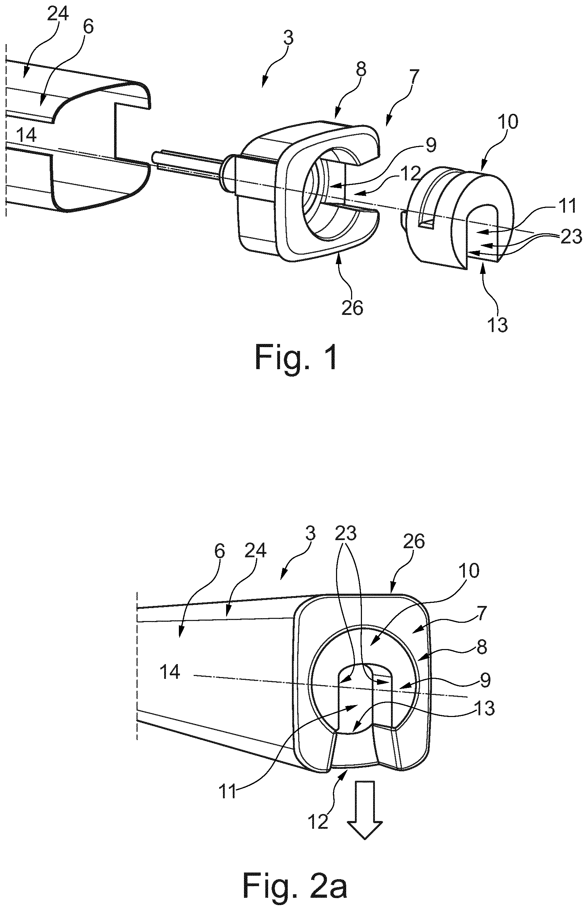

Selon la première réalisation représentée en figures 1 à 3 :
- chaque embout 7 est pourvu d'un élément externe fixe 8 - ici issu de matière dudit embout -, ledit élément fixe étant pourvu d'un logement externe 9, ledit logement débouchant vers l'extérieur dudit dispositif et étant pourvu d'une ouverture radiale externe 12,
- chaque embout 7 est pourvu en outre d'un élément interne mobile 10 monté en rotation selon un axe transversal 14, lesdits éléments fixe et mobile formant moyen de verrouillage, ledit élément mobile étant logé dans ledit logement externe, ledit élément mobile étant pourvu d'un logement interne 11 destiné à recevoir un doigt 4 respectif saillant transversalement d'une ébénisterie 2 pour former moyen réciproque, ledit logement débouchant vers l'extérieur dudit dispositif et étant pourvu d'une ouverture radiale interne 13, de sorte que ledit élément mobile puisse passer réversiblement d'une configuration angulaire de déverrouillage, où lesdites ouvertures sont dans le prolongement l'une de l'autre, à une configuration angulaire de verrouillage, où lesdites ouvertures sont décalées l'une par rapport à l'autre, de manière à refermer ladite ouverture interne et à bloquer ledit doigt dans ledit logement interne.

Le logement interne 11 est destiné à recevoir le doigt 4 en emboitement, de manière à en être solidaire en rotation.

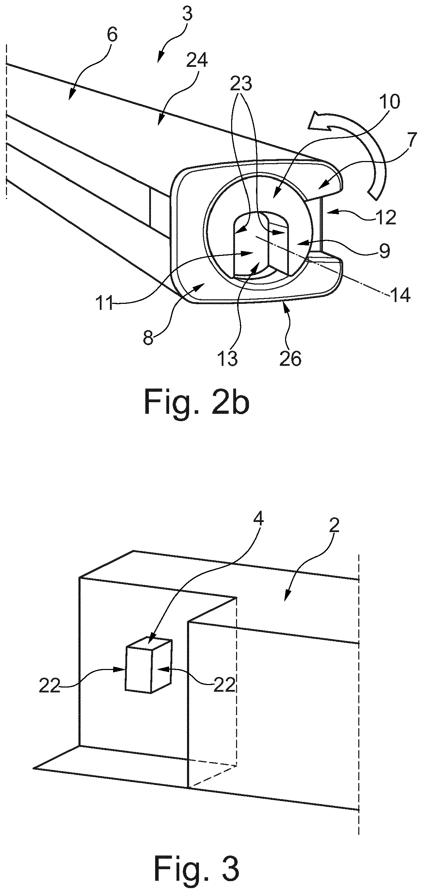

Selon la réalisation représentée en figure 3, un doigt 4 présente en section deux parois planes 22 parallèles, présentant en particulier une section rectangulaire ou carrée, s'ajustant à deux parois complémentaires 23, représentées en figures 1 et 2, prévues dans le logement interne 11, de manière à assurer la solidarisation en rotation dudit doigt et de l'élément mobile 10.

De la sorte, l'élément fixe 8 est mis en rotation par rapport à l'élément mobile 10 par mise en rotation du carter 6 selon l'axe 14, l'élément mobile 10 restant en place car solidarisé en rotation au doigt 4 correspondant.

La mise en rotation du carter 6 est réalisée notamment par saisie dudit carter à pleines mains.

Selon la réalisation représentée, les éléments fixe 8 et mobile 10 sont logés dans le volume intérieur défini par le carter 6.

Un tel agencement permet de limiter la portée en matériau plastique entre embouts 7 et ébénisteries 2, et donc de minimiser le risque de rupture desdits embouts en cas de choc.

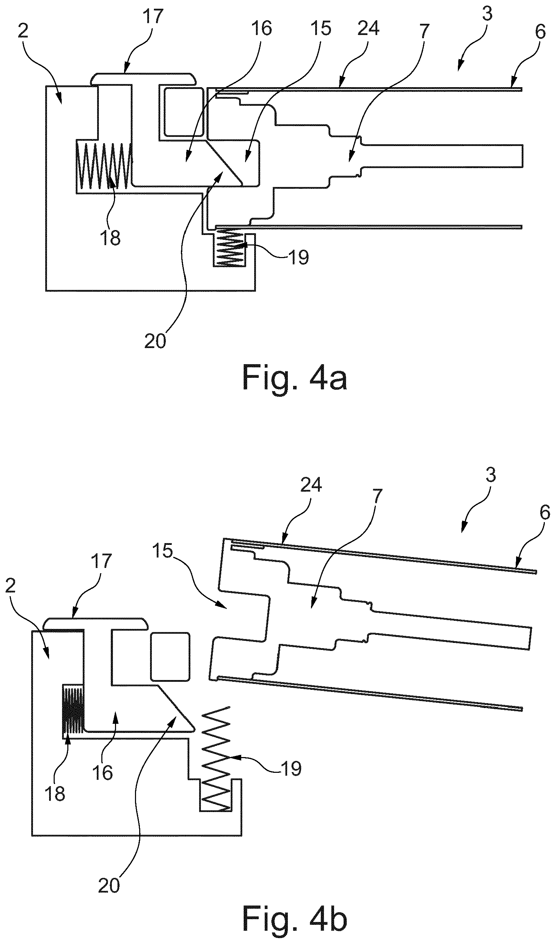

Selon la deuxième réalisation, représentée en figures 4, au moins un embout 7 présente une cavité 15, formant moyen de verrouillage, destinée à recevoir de façon réversible un ergot 16, formant moyen de verrouillage réciproque, monté mobile - ici en translation ou, en variante non représentée, en rotation - sur une ébénisterie 2 entre une position de verrouillage, où il est logé dans ladite cavité de manière à verrouiller le dispositif 3 sur ladite ébénisterie, et une position de déverrouillage, où il est actionné hors de ladite cavité de manière à déverrouiller ledit dispositif de ladite ébénisterie.

Dans la réalisation représentée, l'ergot 16 est solidaire d'un bouton d'actionnement 17 permettant de l'amener en position de déverrouillage.

L'ergot 16 est actionné vers sa position de verrouillage par un premier ressort 18.

Un deuxième ressort 19 est en outre disposé solidairement à l'ébénisterie 2 pour aider au retrait du dispositif 1 de ladite ébénisterie.

L'extrémité libre 20 de l'ergot 16 est conformée en biseau de manière à permettre le montage du dispositif 3 sur l'ébénisterie 2 sans avoir à actionner le bouton 17.

Selon la première réalisation, représentée en figures 1 à 3, les embouts 7 présentent une collerette 26 d'arrêt - permettant de bloquer l'emboitement desdits embouts à une cote donnée - non emboitée dans le carter 6, ladite collerette présentant une épaisseur - c'est à dire une cote transversale - inférieure ou égale à 3 mm.

Bien entendu, cette caractéristique pourrait être appliquée également à la deuxième réalisation représentée en figures 4.

Un tel agencement permet lui aussi de limiter la portée en matériau plastique entre embouts 7 et ébénisteries 2, avec l'avantage sus-décrit.

## Revendications

1. Dispositif (3) de recouvrement d'un compartiment à bagages de véhicule automobile, ledit dispositif comprenant :
• un rideau souple de recouvrement des bagages actionnable entre une configuration déployée de recouvrement et une configuration rétractée de rangement,
• un carter (6) de réception dudit rideau en configuration de rangement, ledit carter présentant une face externe,
• deux embouts (7) en matériau plastique moulé emboités en extrémités dudit carter, chacun desdits embouts étant pourvu d'un moyen de verrouillage (8,10,15) destiné à coopérer avec un moyen réciproque (4,16) prévu sur une ébénisterie (2) latérale respective de garnissage dudit compartiment,
ledit dispositif étant **caractérisé en ce que** lesdits embouts sont associés audit carter sans venir en recouvrement des bordures latérales (24) de ladite face externe.

2. Dispositif selon la revendication 1, **caractérisé en ce que** :
• chaque embout (7) est pourvu d'un élément externe fixe (8), ledit élément fixe étant pourvu d'un logement externe (9), ledit logement débouchant vers l'extérieur dudit dispositif et étant pourvu d'une ouverture radiale externe (12),
• chaque embout (7) est pourvu en outre d'un élément interne mobile (10) monté en rotation selon un axe transversal (14), lesdits éléments fixe et mobile formant moyen de verrouillage, ledit élément mobile étant logé dans ledit logement externe, ledit élément mobile étant pourvu d'un logement interne (11) destiné à recevoir un doigt (4) respectif saillant transversalement d'une ébénisterie (2) pour former moyen réciproque, ledit logement débouchant vers l'extérieur dudit dispositif et étant pourvu d'une ouverture radiale interne (13), de sorte que ledit élément mobile puisse passer réversiblement d'une configuration angulaire de déverrouillage, où lesdites ouvertures sont dans le prolongement l'une de l'autre, à une configuration angulaire de verrouillage, où lesdites ouvertures sont décalées l'une par rapport à l'autre, de manière à refermer ladite ouverture interne et à bloquer ledit doigt dans ledit logement interne.

3. Dispositif selon la revendication 2, **caractérisé en ce que** les éléments fixe (8) et mobile (10) sont logés dans le volume intérieur défini par le carter (6).

4. Dispositif selon la revendication 1, **caractérisé en ce qu'**au moins un embout (7) présente une cavité (15), formant moyen de verrouillage, destinée à recevoir de façon réversible un ergot (16), formant moyen de verrouillage réciproque, monté mobile - notamment en translation ou en rotation - sur une ébénisterie (2) entre une position de verrouillage, où il est logé dans ladite cavité de manière à verrouiller ledit dispositif sur ladite ébénisterie, et une position de déverrouillage, où il est actionné hors de ladite cavité de manière à déverrouiller ledit dispositif de ladite ébénisterie.

5. Dispositif selon l'une quelconque des revendications 1 à 4, **caractérisé en ce que** les embouts (7) présentent une collerette (26) d'arrêt non emboitée dans le carter (6), ladite collerette présentant une épaisseur inférieure ou égale à 3 mm.

## Patentansprüche

1. Abdeckvorrichtung (3) eines Kofferraumfachs eines Kraftfahrzeugs, wobei die Vorrichtung umfasst:
- einen elastischen Vorhang zum Abdecken des Gepäcks, der zwischen einer entfalteten Abdeckungskonfiguration und einer zurückgezogenen Verstaukonfiguration betätigbar ist,
- ein Empfangsgehäuse (6) des Vorhangs in Verstaukonfiguration, wobei das Gehäuse eine Außenseite aufweist,
- zwei an Enden des Gehäuses eingepasste Ansätze (7) aus geformtem Kunststoffmaterial, wobei jeder der Ansätze mit einem Verriegelungsmittel (8, 10, 15) ausgestattet ist, das bestimmt ist, mit einem reziproken Mittel (4, 16), das auf einer jeweiligen seitlichen Verkleidungsblende (2) des Fachs vorgesehen ist, zusammenzuwirken,
wobei die Vorrichtung **dadurch gekennzeichnet, dass** die Ansätze dem Gehäuse zugeordnet sind, ohne die Seitenränder (24) der Außenseite abzudecken.

2. Vorrichtung nach Anspruch 1, **dadurch gekennzeichnet, dass**:
- jeder Ansatz (7) mit einem festen äußeren Element (8) ausgestattet ist, wobei das feste Element mit einer äußeren Aufnahme (9) ausgestattet ist, wobei die Aufnahme aus der Vorrichtung ausmündet und mit einer äußeren radialen Öffnung (12) ausgestattet ist,
- jeder Ansatz (7) ferner mit einem beweglichen inneren Element (10) ausgestattet ist, das gemäß einer transversalen Achse (14) rotierend angebracht ist, wobei das feste Element und das bewegliche Element ein Verriegelungsmittel bilden, wobei das bewegliche Element in der äußeren Aufnahme aufgenommen ist, wobei das bewegliche Element mit einer inneren Aufnahme (11) ausgestattet ist, die bestimmt ist, einen jeweiligen, von einer Blende (2) transversal vorstehenden Finger (4) zu empfangen, um reziprokes Mittel zu bilden, wobei die Aufnahme aus der Vorrichtung ausmündet und mit einer inneren radialen Öffnung (13) derart ausgestattet ist, dass das bewegliche Element reversibel aus einer entriegelnden Winkelkonfiguration, in der die Öffnungen in der Verlängerung zueinander sind, in eine verriegelnde Winkelkonfiguration, in der die Öffnungen in Bezug zueinander derart versetzt sind, dass die innere Öffnung verschlossen und der Finger in der inneren Aufnahme blockiert ist, wechseln kann.

3. Vorrichtung nach Anspruch 2, **dadurch gekennzeichnet, dass** das feste Element (8) und das bewegliche Element (10) in dem inneren Volumen aufgenommen sind, das von dem Gehäuse (6) definiert ist.

4. Vorrichtung nach Anspruch 1, **dadurch gekennzeichnet, dass** mindestens ein Ansatz (7) einen Hohlraum (15) aufweist, der Verriegelungsmittel bildet, der bestimmt ist, einen Vorsprung (16) reversibel zu empfangen, der reziprokes Verriegelungsmittel bildet, der beweglich - vor allem verschiebend oder rotierend - auf einer Blende (2) zwischen einer Verriegelungsposition, in der er in dem Hohlraum derart aufgenommen ist, dass die Vorrichtung auf der Blende verriegelt ist, und einer Entriegelungsposition, in der er aus dem Hohlraum derart betätigt wird, dass die Vorrichtung von der Blende entriegelt wird, angebracht ist.

5. Vorrichtung nach einem der Ansprüche 1 bis 4, **dadurch gekennzeichnet, dass** die Ansätze (7) einen nicht in das Gehäuse (6) eingepassten Anschlagflansch (26) aufweisen, wobei der Flansch eine Dicke von unter oder gleich 3 mm aufweist.

## Claims

1. Device (3) for covering a motor vehicle luggage compartment, said device comprising:
- a flexible curtain for covering the luggage, able to be actuated between a deployed covering configuration and a retracted storage configuration,
- a casing (6) for receiving said curtain in the storage configuration, said casing having an external face,
- two end pieces (7) made from moulded plastics material, fitted at the ends of said casing, each of said end pieces being provided with a locking means (8, 10, 15) intended to cooperate with a reciprocal means (4, 16) provided on a respective lateral panel (2) lining said compartment,
said device being **characterised in that** said end pieces are associated with said casing without overlapping the lateral rims (24) of said external face.

2. Device according to claim 1, **characterised in that**:
- each end piece (7) is provided with a fixed external element (8), said fixed element being provided with an external housing (9), said housing emerging towards the outside of said device and being provided with an external radial opening (12),
- each end piece (7) is further provided with a movable internal element (10) mounted for rotation on a transverse axis (14), said fixed and movable elements forming a locking means, said movable element being housed in said external housing, said movable element being provided with an internal housing (11) intended to receive a respective finger (4) projecting transversely from a panel (2) in order to form a reciprocal means, said housing emerging towards the outside of said device and being provided with an internal radial opening (13), so that said movable element can pass reversibly from an angular release configuration in which said openings are in line with each other, to an angular locking configuration in which said openings are offset with respect to each other, so as to close said internal opening and to lock said finger in said internal housing.

3. Device according to claim 2, **characterised in that** the fixed (8) and movable (10) elements are housed in the internal space defined by the casing (6).

4. Device according to claim 1, **characterised in that** at least one end piece (7) has a cavity (15), forming a locking means, intended to reversibly receive a lug (16), forming a reciprocal locking means, mounted so as to be able to move - in particular in translation or in rotation - on a panel (2) between a locking position in which it is housed in said cavity so as to lock said device on said panel, and a release position in which it is actuated out of said cavity so as to release said device from said panel.

5. Device according to any of claims 1 to 4, **characterised in that** the end pieces (7) having a stop collar (26) not fitted in the casing (6), said collar having a thickness less than or equal to 3 mm.
